# EUROPEAN PATENT SPECIFICATION

(11) **EP 1 906 113 B1**
(45) Date of publication and mention of the grant of the patent: **17.06.2009**
(21) Application number: 07117536.8
(22) Date of filing: 28.09.2007
(51) Int. Cl.: F25B 39/02, F28F 1/22

(54) **Production method of evaporator**
Herstellungsverfahren für einen Verdampfer
Procédé de production d'évaporateur

(30) Priority: 29.09.2006 TR 200605393
(43) Date of publication of application: 02.04.2008
(73) Proprietor: Vestel Beyaz Esya Sanayi Ve Ticaret A.S., 45030 Manisa (TR)
(72) Inventor: Yilmaz, Umut, Izmir (TR); Turan, Halil, 35030 Izmir (TR)
(74) Representative: Cayli, Hülya

(56) References cited:
- EP-A- 0 834 714
- EP-A- 1 550 834
- WO-A-20/06065195
- GB-A- 2 421 457
- US-B1- 6 300 591

## Description

### Technical Field

This invention is related to the method of assembling the tube and plate which are contained in the plate tube type evaporators utilized in cooling devices according to the preamble of claim 1. Such a method is known for instance from EP-A-0 834 714.

### Prior Art

In the present cooling devices, mostly sheet-tube type evaporators, plate-tube type evaporators and roll-bond type evaporators are used. The evaporators used in the inventive method are plate tube type evaporators and basically comprise a metal tube (serpantine) with high heat conductivity and a metal plate with high heat conductivity.

In the evaporators, a metal tube with high heat conductivity through which a cooling fluid passes is secured onto a metal plate with high heat conductivity. In these systems, thermal pastes, Al retainers and Al/PP/PVC bands with high heat conductivity are used in order to assemble a specific region of a metal tube to a metal plate. As a result of such assembling processes, the contact between a metal tube and a metal plate cannot be provided at the desired level; therefore the heat transfer is also not performed at the desired level.

The section of a metal tube which is pressed after it is bent in a specific form is not constant throughout the tube. Therefore, the metal tubes which are placed on a planar metal plate do not exactly contact the plate surface at each point. Thermal pastes, Al retainers and bands which are used to provide this contact cannot apply a pressing force which will ensure the exact contact. As a result of the production processes, evaporators cannot have the total heat transfer surface area which is calculated at the design stage. As a result thereof, evaporator operates at a value which is below the thermal capacity calculated at the design stage. In order to provide this construction, the use of some parts which are not directly necessary for the mounting of the evaporator is also required.

However, due to the high pressure flow of the fluid in the tube, an undesired noise problem arises in the metal tubes. In order to eliminate this problem, sound attenuating rubbers and Al retainers are used on the evaporator surface, but the problem cannot be strictly eliminated.

In the systems disclosed in the patent documents EP0222176 and W09835191, the assembly of the tube and the plate which are used in the evaporators with the brazing method is disclosed. There may be experienced some problems in the heat transmission since the coating on the outer surface of the tube melts somewhat with this method.

In the patent document JP 2001334333, the use of a laser welding or an electric welding to assemble the sheets to each other in the heat exchanger is described.

In the patent document US006300591, the method of assembling planar metal surface to a cylindrical surface by laser welding is described. In this method, in order to create a welding seam region, the planar surface is closed up to the cylindrical surface in such a way that the planar surface nearly touches it. Thus, the planar and cylindrical surfaces create an acute angle. The laser beam of rays formed later is transmitted to the welding seam region from this acute angle. One of the disadvantages of this method is that the angle of application of laser beam of rays must be bigger than the conical angle of the beam of rays in order for the focused welding beam of rays not to collide to the planar surface since welding process is performed from the side where the cylindrical surface exists. Another disadvantage is that it is difficult for the laser equipment to draw alongside a narrow area.

In the patent document US20050145680, the method of assembling copper tubes to one or more aluminium plates by using laser welding, with a similar method to the one disclosed in the patent document US006300591 is described. It is disclosed that in order to increase the efficiency, the tube can be welded from both sides simultaneously. This method also bears the abovementioned disadvantage disclosed in relation with the patent document UU006300591.

In the patent documents W02006/065195 and W02006/067378, the automation systems operate with a method similar to the ones disclosed in the patent documents US20050145680 and US006300591.

For the ultrasonic welded evaporator production method, the contact between the tube and the plate in the plate tube type evaporators is provided by using ultrasonic welding. The ultrasonic welding which is applied on the evaporator is maintained at a constant width and throughout the tube. Thus, a high contact between the metal plate and the metal tube is provided, obtaining a much smoother heat transfer surface area; since a more robust, regular and rigid structure is provided due to the quality of the ultrasonic welding seam, the evaporator operates with much higher thermal efficiency.

### Aim of the Invention

An aim of this invention in the plate-tube type evaporators which are used in the cooling devices is to increase the thermal efficiency of the evaporators and thus to decrease the energy consumption of the coolers through the provision of a better contact and engagement between the tube and the plate surfaces by assembling the tube and the plate to each other with the laser welding method.

Another aim of the invention is to provide a more homogenous temperature distribution over the evaporator by using the laser welding method.

In addition, by using the laser welding method, it is aimed to overcome the noise problem which arises in the tube due to movement of the fluid, contained in the tube, under a high pressure.

### Description of the Drawings

The evaporator production method is shown in the attached drawings, wherein:
Fig. 1 is a front view of the evaporator.
Fig. 2 is a rear view of the evaporator.
Fig. 3 is a view of the ultrasonic welding seam.
Fig.4 is a view of the laser welding seam.
Fig.5 is the detailed view of the intermittent laser welding seam application.
Fig.6 is the detailed view of the continuous laser welding seam application.
Fig.7 is the view of the direction and shape of the laser welding application.

The parts in the figures are numbered one by one and the corresponding terms of these numbers are given below.
Evaporator (A)
Metal tube (1)
Metal plate (2)
Welding seam (3)
Laser welding spot (4)
Fixture (5)
The application direction of the laser welding ray (6)

### Disclosure of Invention

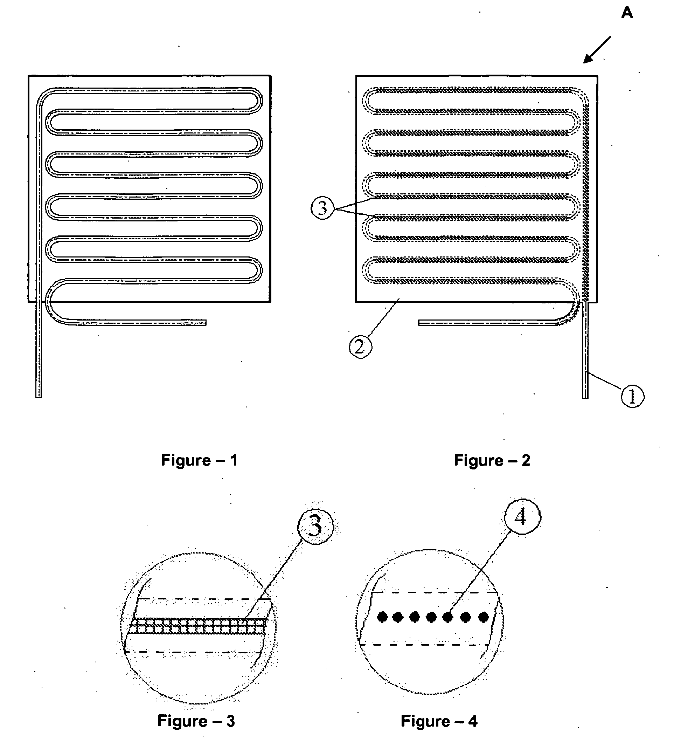

The evaporator (A), of which front view is provided in fig. 1 and rear view is provided fig. 2, used in coolers of different type comprises a metal tube (1) with high heat conductivity in which a cooling fluid at low temperature circulates and a metal plate (2) with high heat conductivity on which the metal tube (1) is secured and which distributes the heat that the tube absorbs over the large surfaces evenly.

Since there are interferences at the size of sliding planes between the metal tube (1) and the metal plate (2) atoms on the region where the welding seam exists, in these regions the structure is continuous throughout the welding seam as if there is almost a single material. Thus, due to the low temperature of the cooling fluid which passes through the metal tube (1), the heat is absorbed from the surface of the metal plate (2) with the help of the regions where the ultrasonic welding seam (3) exists. In this way, the heat is absorbed from the inner volume of the cooler with which the metal plate (2) directly or indirectly contacts.

In order to prevent the tearing problem which may occur in the welding seam and provide a continuous seam, the current, pressure, frequency and circle parameters of the ultrasonic welding machine should be set according to the different thickness and alloy properties of the metals applied.

The laser welding is used to assemble the metal tube and the metal plate which are contained in the evaporator. In the laser welding, the seam is applied throughout the tube at certain intervals and in parallel with the circular section of the tube. In this assembling method, the contact surface which provides the heat transfer is also increased, thus allowing evaporator to operate with high thermal efficiency.

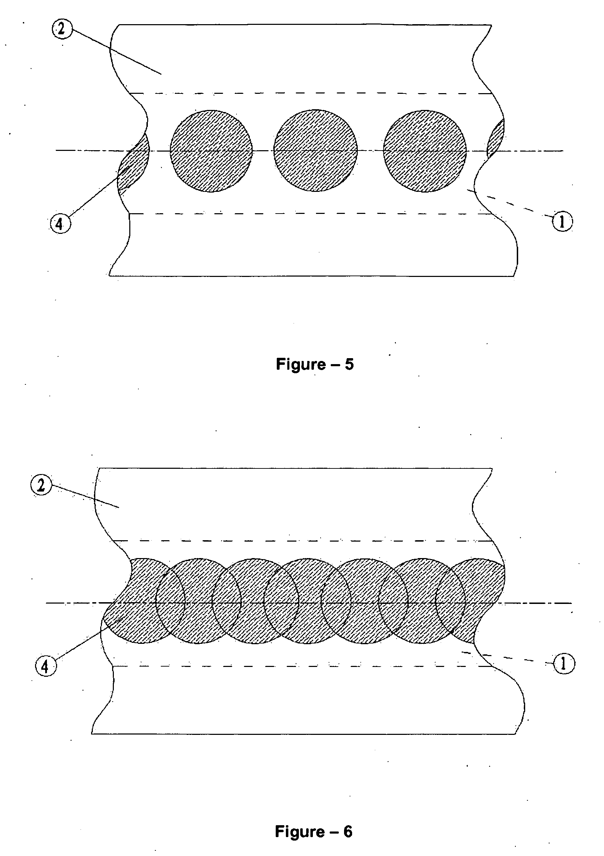

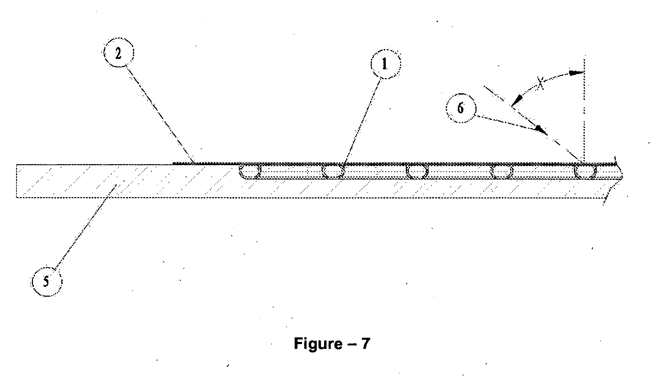

In the method applied by using laser welding, a metal plate (2) with high heat conductivity and the metal tube with high heat conductivity (1) are secured on each other at certain intervals as shown in fig. 5 or throughout the tube (1) with the continuous seam as shown in fig. 6, by changing the diameters of welding spots (4) and the intervals among them. During this process, the laser welding is applied from the direction behind the surface where the metal plate (2) meets the metal tube (1). Thus, differently from other applications, securing the metal tube (1) on the metal plate (2) is performed quite easily through the advantage of the application direction of the laser welding ray (6) as shown in fig. 7. The fixture (5) used enables the laser ray to aim at the welding spot in the most accurate and reliable way. Angle and focusing problems and as a result of it, the difficulties in production experienced in the prior art can be eliminated through this method. In this application, as differently from the prior art, hot gas is passed through the metal tube (1) before, during and after the laser welding process, and thus the problems such as deformation and perforation appearing on metal tube (1) and the metal plate (2) during the laser welding process can be eliminated. Moreover, thanks to the hot gas application, the energy consumed by the laser ray during the laser welding process can also be decreased to some extent. Thus, a better contact between the metal plate (2) and the metal tube (1) is provided, obtaining a much smoother heat transfer surface area.

## Claims

1. A production method of the evaporator (A) used in coolers of different type comprising a metal tube (1) with high heat conductivity in which a cooling fluid at low temperature circulates and a metal plate (2) with high heat conductivity on which the metal tube (1) is secured and which distributes the heat that the tube absorbs over the large surfaces evenly; and in order to obtain a smooth heat transfer surface area by providing a better contact between the metal plate (2) and the metal tube (1), the metal plate (2) with high heat conductivity and the metal tube (1) with high heat conductivity being secured to each other throughout the tube (1) with a continuous seam or at certain intervals changing the diameters of welding points (4) and the intervals between them by using laser welding and said method **characterized in that**
the laser welding is applied from the direction behind the surface where the metal plate (2) meets the metal tube (1).

2. A production method according to claim 1 wherein gas at high temperature is passed through the metal tube (1) before, during and after the laser welding process.

## Patentansprüche

1. Herstellungsverfahren für einen in verschiedenartigen Kühlgeräten Verwendung findenden Verdampfer (A), der ein Metallrohr (1) mit hoher Wärmeleitfähigkeit, in dem eine Kühlflüssigkeit mit niedriger Temperatur zirkuliert, und eine Metallplatte (2) mit hoher Wärmeleitfähigkeit aufweist, an der das Metallrohr (1) befestigt ist und die die Wärme, die das Rohr aufnimmt, über die großen Flächen gleichmäßig verteilt; und um eine glatte Wärmeübertragungsoberfläche durch Bereitstellung eines besseren Kontakts zwischen der Metallplatte (2) und dem Metallrohr(1) zu erhalten, die Metallplatte (2) mit hoher Wärmeleitfähigkeit und das Metallrohr (1) mit hoher Wärmeleitfähigkeit über das gesamte Rohr (1) hinweg mit einer durchgehenden Naht oder in bestimmten Abständen unter Veränderung der Durchmesser von Schweißstellen (4) und den Abständen zwischen diesen unter Verwendung von Laserschweißung aneinander befestigt werden, und das Verfahren **dadurch gekennzeichnet ist, dass**
die Laserschweißung aus der Richtung hinter der Fläche angelegt wird, an der die Metallplatte (2) auf das Metallrohr (1) trifft.

2. Herstellungsverfahren nach Anspruch 1, wobei vor, während und nach dem Laserschweißprozess Gas mit hoher Temperatur durch das Metallrohr (1) geleitet wird.

## Revendications

1. Procédé de production de l'évaporateur (A) utilisé dans des refroidisseurs de différents types, comprenant un tube métallique (1) de conductivité thermique élevée dans lequel un fluide de refroidissement à basse température circule et une plaque métallique (2) d'une conductivité thermique élevée sur laquelle le tube métallique (1) est fixé et qui répartit uniformément la chaleur que le tube absorbe sur les grandes surfaces ; et afin d'obtenir une surface de transfert de chaleur régulière en fournissant un meilleur contact entre la plaque métallique (2) et le tube métallique (1), la plaque métallique (2) de conductivité thermique élevée et le tube métallique (1) de conductivité thermique élevée étant fixés l'un à l'autre dans l'ensemble du tube (1) avec un joint continu ou à certains intervalles changeant les diamètres des points de soudure (4) et les intervalles entre ceux-ci en utilisant une soudure au laser et ledit procédé étant **caractérisé en ce que :**
la soudure au laser est appliquée depuis la direction derrière la surface sur laquelle la plaque métallique (2) rencontre le tube métallique (1).

2. Procédé de production selon la revendication 1, dans lequel un gaz à haute température traverse le tube métallique (1) avant, pendant et après le procédé de soudure au laser.
